# NEUE EUROPÄISCHE PATENTSCHRIFT

(11) **EP 1 450 460 B2**
(45) Veröffentlichungstag und Bekanntmachung des Hinweises auf die Entscheidung über den Einspruch: **02.03.2022**
(45) Hinweis auf die Patenterteilung: 01.10.2014
(21) Anmeldenummer: 04003900.0
(22) Anmeldetag: 20.02.2004
(51) Int. Cl.: H02H 7/085, H02H 6/00

(54) **Verfahren zur Temperaturüberwachung eines Elektromotors**
Method for monitoring the temperature of an electromotor
Procédé de surveillance de la température d'un moteur électrique

(30) Priorität: 24.02.2003 DE 10307708
(43) Veröffentlichungstag der Anmeldung: 25.08.2004
(73) Patentinhaber: Lenze Drives GmbH, 32699 Extertal (DE)
(72) Erfinder: Borcherding, Holger, Dr., 31840 Hessisch Oldendorf (DE); Eutebach, Thomas, Dr., 31785 Hameln (DE); Fräger, Carsten, Dr., 31787 Hameln (DE); Hilfert, Sven, Dr., 31855 Aerzen (DE); Tieste, Karl-Dieter, Dr., 30169 Hannover (DE); Tinebor, Manfred, 32683 Barntrup (DE)
(74) Vertreter: Schober, Mirko

(56) Entgegenhaltungen:
- WO-A-93/23904
- DE-A1- 4 038 198
- DE-A1- 4 438 132
- DE-A1- 10 119 201
- DE-A1- 19 614 900
- DE-A1- 19 710 890
- DE-A1- 19 939 997
- GB-A- 2 151 862
- GB-A- 2 151 862
- US-A- 4 525 763
- US-A- 4 547 826
- US-B1- 6 434 505
- US-B1- 6 434 505
- T Gern: "Diplomarbeit", Temperaturmodell zur Erfassung der Wicklungstemperatur kleiner Maschinen,
- H. Nestler: "Dissertation", Einsatz des Luenbrger-Beobachters zur On-Line Temperaturschatzüng in elektrischen Maschinen,

## Beschreibung

Die Erfindung bezieht sich auf ein Verfahren zur Temperaturüberwachung eines Elektromotors, der an einer Antriebsregeleinheit betrieben wird, welche die elektrischen Betriebsgrößen, wie Spannung, Strom und/oder Frequenz vorgibt.

Solche aus einem Elektromotor und einer Antriebsregeleinheit bestehende Antriebseinheiten werden vorwiegend zum Antrieb von Bearbeitungsmaschinen eingesetzt. Infolge Betriebsstörungen an einer derartigen Maschine oder auch am Elektromotor selbst, kann es zu einer unzulässig hohen Temperatur im Elektromotor kommen. Solche Fälle treten bei unvorgesehenen hohen Belastungen der Maschine auf, wie bei Schwergängigkeiten oder Blockade der Mechanik. Auch verstopfte Belüftungsgitter am Elektromotor können Temperaturerhöhungen nach sich ziehen. Überschreitet die Motortemperatur die zulässige Temperatur, nimmt der Elektromotor Schaden, was den Ausfall der gesamten Maschine nach sich zieht. Zum Schutz des Elektromotors vor Überhitzung ist deshalb die Ermittlung der Wicklungstemperatur und anderer Temperaturen an kritischen Stellen im Motor, wie den sonstigen elektrisch oder magnetisch aktiven Teilen, Kontakten, Steckverbindern oder dergl., erforderlich.

Aus der Offenlegungsschrift WO 93/23904 A1 ist ein Verfahren zur Überwachung eines Elektromotors im Hinblick auf eine thermische Überlastung bekannt, bei dem es darum geht, den technischen Aufwand und das Bauvolumen des notwendigen Überlastungsschutzes des Elektromotors kleinzuhalten. Dazu wird während der Einschaltdauer des Elektromotors dessen Verlustleistung oder eine hierzu proportionale Größe anhand gemessener Motordaten berechnet und anschließend integriert. Der Integrationswert wird mit einem vorgegebenen Schwellwert verglichen, übersteigt der Integrationswert einen Schwellwertgrenzwert, wird der Elektromotor abgeschaltet. Nach diesem bekannten Verfahren kann die tatsächliche Wicklungstemperatur nur näherungsweise ermittelt werden, außerdem bleiben Umgebungseinflüsse, die für das Temperaturverhalten des Elektromotors mitverantwortlich sind, unberücksichtigt.

Bei anderen bekannten Verfahren, die ebenfalls ohne einen Temperaturfühler auskommen, wird der vom Elektromotor gezogene Strom überwacht. Überschreitet der Motorstrom über einen längeren Zeitraum hinweg den zulässigen Dauerstrom, erfolgt die Abschaltung des Motors über Motorschutzschalter oder bei drehzahlregelbaren Drehstrommotoren über den Frequenzumrichter.

Weitere bekannte Verfahren zum Schutz eines Elektromotors gegen Überhitzung sehen eine Temperaturmessung mittels eines Temperatursensors vor, der vornehmlich in die Motorwicklung eingebaut wird. Erreicht die auf diese Weise ermittelte Temperatur im Nahbereich der Motorwicklung einen vorgegebenen, höchstzulässigen Grenzwert, wird auch hierbei die Abschaltung des Elektromotors veranlaßt. Ein derartiges Verfahren ist aus der Offenlegungsschrift DE 199 39 997 A1 bekannt, bei dem der Überlastungsschutz des Elektromotors insbesondere hinsichtlich des Zeitverhaltens verbessert werden soll. Dazu ist eine Signalverarbeitung vorgesehen, die in Abhängigkeit von dem Ausgangssignal und von zumindest einem in der Vergangenheit liegenden Ausgangssignals des Temperatursensors ein korrigiertes Temperatursignal erzeugt. Zwar kann man ein schnelleres Ansprechen der Temperaturabschaltung damit erreichen, jedoch bleibt der aktuelle Betriebszustand des Motors, wie er sich u.a. aus dem Motorstrom der Drehzahl oder anderen Zustandsgrößen ergibt, unberücksichtigt. Auch kann eine derartige Signalverarbeitung nicht berücksichtigen, dass sich äußere Einflüsse, die für das Temperaturverhalten des Motors relevant sind, ändern. Dies können zum Einen Schwankungen der Umgebungstemperatur sein, die sich auf die Wärmeabfuhr aufwirken. Es ist jedoch auch möglich, dass - beispielsweise durch den Ausfall eines Lüfters oder ähnliches - sich die Wärmeübergangseigenschaften für die Wärmeabfuhr aus dem Motor ändern. In einem solchen Fall versagt eine Methode wie die in der DE 199 39 997 A1 offenbarte, da dort näherungsweise von einem konstanten Wärmeübergang an eine Umgebung mit konstanter Umgebungstemperatur ausgegangen wird.

Die erörterten Verfahren haben eine Reihe von Nachteilen, aus denen sich in der Praxis Probleme ergeben. Bei Verwendung eines Temperatursensors ist zur elektrischen Isolierung zwischen diesem und der Wicklung eine ausreichende Isolierschicht erforderlich. Diese Isolierschicht stellt zugleich eine thermische Isolierung dar, weswegen sich insbesondere bei Überlast mit hohen Strömen eine Temperaturdifferenz zwischen dem elektrisch aktiven Teil der Wicklung selbst und dem Temperatursensor ergibt. Eine verzögerte Abschaltung des Elektromotors bei bereits vorliegender Überhitzung der Motorwicklung ist die Folge. Dieser Effekt wird durch erhöhte Anforderungen an die elektrische Isolierung für den Personenschutz noch verstärkt. Über einen in die Wicklung eingebauten Temperatursensor wird überdies die Temperatur nur an einer einzigen Stelle der Wicklung erfaßt. Vor aliem beim Betrieb an einem Frequenzumrichter mit kleinen Speisefrequenzen kann sich eine stark unterschiedliche Erwärmung der Wicklungsteile ergeben. Hierbei kann die heißeste Stelle der Wicklung, an der bereits eine Überhitzung vorliegt, nicht mit Sicherheit erfaßt werden. Weiter störend ist die kapazitive Kopplung zwischen dem Temperatursensor und der Motorwicklung vor allem bei frequenzgesteuerten Motoren, weil Koppelströme über die Temperatursensorleitung übertragen werden.

Bei der Motorabschaltung über die Strom- oder Verlustmessung können Änderungen in den äußeren Umgebungsbedingungen des Elektromotors nicht erkannt werden, wie Beeinträchtigung der Kühlverhältnisse durch verstopfte oder ausgefallene Lüfter. Auch bereitet es bei der Abschaltung über die Strommessung Schwierigkeiten, den höchstzulässigen Dauerstrom korrekt am Motorschutz einstellen zu können. Die Verluste der magnetisch aktiven Teile des Elektromotors, also die Eisenverluste, werden bei der Strommessung nicht erfaßt.

Insgesamt bezieht sich bei den bekannten Verfahren der Temperaturschutz nicht auf weitere gefährdete Komponenten des Motors, wie Kugellager, Magnete, elektrische Anschlüsse und dergleichen. GB2151862 offenbart die Verwendung eines thermischen Modells für die Berechnung der Temperaturverteilung an interessierenden Stellen in einem Motor. Dieses Dokument fordert zur Verbesserung der Genauigkeit die Kenntnis der Umgebungstemperatur und offenbart nicht die Erfassung einer Temperatur an einer Stelle des Elektromotors die der Erfassung von Umgebungseinflüssen und der Verbesserung der Rechengenauigkeit dient. Bei der Motorabschaltung über die Verlustmessung oder der Korrektur des Temperatursignals, welches vom Temperatursensor geliefert wird, besteht die Gefahr, mit falschen, nicht zum angeschlossenen Elektromotor passenden Parametern zu arbeiten.

Der Erfindung liegt die Aufgabe zugrunde, ein Verfahren zur Temperaturüberwachung eines Elektromotors der eingangs genannten Art zu schaffen, mit dem unzulässige Temperaturen der elektrisch und/oder magnetisch aktiven Teile des Elektromotors schneller und sicherer sowie insbesondere unabhängig von der Umgebungstemperatur und/oder Änderungen des Wärmeübergangs bei der Wärmeabfuhr aus dem Motor erfaßt werden, um eine rechtzeitige Motorabschaltung bei thermischer Überlastung vornehmen zu können.
Gelöst wird diese Aufgabe durch ein Verfahren mit den Merkmalen des Anspruchs 1. Vorteilhafte Ausführungsformen finden sich in den abhängigen Ansprüchen.

Es wird bei einem Verfahren zur Temperaturüberwachung eines Elektromotors, der an einer Antriebsregeleinheit betrieben wird, welche die elektrischen Betriebsgrößen, wie Spannung, Strom und/oder Frequenz vorgibt, mittels zumindest eines am Elektromotor angeordneten Temperatursensors eine Temperatur gemessen und unter Verwendung von zur Ermittlung der Wicklungstemperatur abgespeicherten Motorparametern ausgewertet. Ferner werden mit Hilfe eines dynamischen thermischen Motormodells aus den Betriebsgrößen, aus dem wenigstens einen gemessenen Temperaturwert und aus den ausgelesenen Motorparametern im Motor an interessierenden Stellen auftretende Temperaturen berechnet, insbesondere wird die Wicklungstemperatur auf diese Weise berechnet.

Für die Erfindung ist wesentlich, daß nicht nur mittels eines Temperatursensors am Motor eine Temperatur gemessen wird. Denn ferner werden die für die Motorerwärmung maßgebenden Betriebsparameter, wie Drehzahl, Strom oder andere Zustandsgrößen erfaßt. Aus der gemessenen Temperatur und den aktuellen Betriebsparametern wird die tatsächliche Temperatur der Motorwicklung und/oder anderer kritischer Bauteile des Motors berechnet. Hierfür wird ein Temperaturmodell angewendet, welches das dynamische Temperaturverhalten des Motors nachbildet. Die gemessene Temperatur dient hierbei der Erfassung von Umgebungseinflüssen und der Verbesserung der Rechengenauigkeit des thermischen Motormodells.

Die für das thermische Motormodell notwendigen Motorparameter, wie thermische Zeitkonstanten und thermische Widerstände, werden im Motor in einer Elektronikbaugruppe gespeichert und für die Berechnung der zu erfassenden Temperaturen zusammen mit der gemessenen Temperatur verarbeitet.

Anhand der meßbaren elektrischen Daten lassen sich mit dem Motormodell die Temperatur der Motorwicklung und anderer kritischer Temperaturen wie die der Magnetteile, Steckverbinder, Kontakte und dergl. errechnen. So sind bei Überlast auftretende hohe Phasenströme in der Wicklung des Antriebsmotors sofort erfaßbar und die dadurch bedingte Temperaturerhöhung mittels des thermischen Motormodells schnell zu ermitteln. Mit den üblichen, an den elektrischen und/oder magnetisch aktiven Teilen des Elektromotors angeordneten Temperatursensoren allein ist dies nicht zu erreichen.

Mittels des Temperatursensors wird die Temperatur an einem definierten Punkt im Motor gemessen. Dies geschieht erfindungsgemäß am B-Lagerschild. Über die elektrischen Größen, wie Widerstand, Spannung, Strom und/oder Frequenz, werden die aktuellen Verluste bestimmt und als Eingangsgrößen für das thermische Motormodell verwendet. Weitere Größen zur Steuerung des thermischen Motormodells können sein die induzierte Spannung des Motors und im speziellen der Ständerwicklungswiderstand. Durch das thermische Motormodell werden schnelle Temperaturänderungen erfaßt, und hierbei verhindert der Temperatursensor im Motor eine Drift des Modells und ermöglicht die Berücksichtigung von Änderungen in der Umgebungstemperatur.

Der Temperatursensor kann in einer nicht erfinderungsgemäßen Ausführung nahe an der Motorwicklung jedoch nicht in der Motorwicklung angeordnet sein. Durch diese Anordnung wird allein schon bei der Herstellung des Elektromotors der Montageaufwand verringert, und es erübrigt sich, bei der wicklungsfernen Anordnung des Temperatursensors zu dessen Schutz und zum Schutz der Auswerteinrichtungen einen hohen Isolationsaufwand zu treiben.

Im thermischen Motormodell, das auch als Temperaturmodell bezeichnet werden kann, werden in erster Linie die Wicklungsverluste des Motors aus den Motorströmen und aus dem Wicklungswiderstand errechnet. Dazu können die Klemmenspannung oder die Phasenströme herangezogen werden, es kann auch - wie erwähnt - auf die induzierte Spannung des Motors oder auf den Ständerwicklungswiderstand zurückgegriffen werden. Gegebenenfalls können weitere Verluste, wie die Eisenverluste, ermittelt und berücksichtigt werden. Aus den Verlusten wird unter Berücksichtigung der thermischen Widerstände und der Wärmekapazitäten des Antriebsmotors ein Temperaturwert errechnet, der mit dem vom Temperatursensor erfaßten Temperaturwert im thermischen Motormodell verglichen wird. Aus den beiden Temperaturwerten ergibt sich eine Temperaturdifferenz, die zur tatsächlichen Wicklungstemperatur führt. In gleicher Weise kann auch eine Temperaturüberwachung anderer Bauteile des Elektromotors vorgenommen werden, indem auch für diese Bauteile die zugehörigen Verluste und thermischen Widerstände sowie die Wärmekapazitäten berücksichtigt werden.

Wird der Temperatursensor sozusagen wicklungsfern an einem definierten Punkt im Elektromotor angeordnet, wie an dem erwähnten üblichen B-Lagerschild, kann dies nachträglich vorgenommen werden, denn weitergehende Eingriffe in den Antriebsmotor sind dazu nicht erforderlich. Auf die an einem solchen Punkt im Motor erfaßbare Temperatur hat die Umgebungstemperatur des Elektromotors einen erheblichen Ein-fluß. Hiervon ist es wiederum abhängig, in welchem Maße die im Elektromotor entstehende Verlustwärme abgeführt werden kann. Die Temperaturauswertung über das thermische Motormodell macht es möglich, bei niedrigen Umgebungstemperaturen den Elektromotor höher belasten zu können. Umgekehrt wird bei hohen Umgebungstemperaturen die niedrigere Belastungsgrenze des Elektromotors, die es einzuhalten gilt, rechtzeitig angezeigt, um Schäden am Antriebsmotor, wie ein Verbrennen der Motorwicklung, zu vermeiden.

Die Motorparameter, die für die Temperaturberechnung erforderlich sind, sind zweckmäßig in einem Datenspeicher abgelegt, der in den Motor integriert ist. Fehleinstellungen und -auswertungen im thermischen Motormodell sind dadurch ausgeschlossen.

In weiterer zweckmäßiger Ausgestaltung der Erfindung werden die nicht gemessenen Temperaturen, wie die Wicklungstemperatur, die Rotor- oder Lagertemperatur des Elektromotors im thermischen Motormodell mittels eines Mikrorechners oder einer analogen elektrischen Schaltung berechnet. Diese Rechnerbauteile befinden sich entweder in der Antriebsregeleinheit oder im Elektromotor selbst.

Insgesamt wird eine Überwachung der Wicklungstemperatur und anderer Temperaturen innerhalb des Elektromotors zu dessen Schutz und zur Nachführung der Motorparameter erreicht, indem ein wicklungsfern eingebauter Temperaturfühler und ein mitlaufendes Motor-Temperaturmodell vorgesehen wird, für das die Bereitstellung der Parameter für die Temperaturüberwachung durch einen mit dem Temperatursensor verbundenen Datenspeicher erfolgt.

## Patentansprüche

1. Verfahren zur Temperaturüberwachung eines Elektromotors, der an einer Antriebsregeleinheit betrieben wird, welche die elektrischen Betriebsgrößen, wie Spannung, Strom und/ oder Frequenz vorgibt, wobei mittels zumindest eines am Elektromotor angeordneten Temperatursensors, der am B-Lagerschild des Motors angeordnet ist, eine Temperatur gemessen und unter Verwendung von zur Ermittlung der Wicklungstemperatur abgespeicherten Motorparametern ausgewertet wird, wobei ferner mit Hilfe eines dynamischen thermischen Motormodells aus den Betriebsgrößen, aus dem zumindest einen gemessenen Temperaturwert und aus den ausgelesenen Motorparametern im Motor an interessierenden Stellen auftretende Temperaturen, wie die Wicklungstemperatur, berechnet werden, wobei die gemessene Temperatur zur Verbesserung der Rechengenauigkeit des Motormodells dient.

2. Verfahren nach Anspruch 1,
**dadurch gekennzeichnet,**
**daß** die Temperaturen an den interessierenden Stellen im Elektromotor mittels eines Mikrorechners berechnet werden.

3. Verfahren nach Anspruch 1,
**dadurch gekennzeichnet,**
**daß** die Temperaturen an den interessierenden Stellen im Elektromotor mittels einer analogen Schaltung berechnet werden.

4. Verfahren nach einem der Ansprüche 1 - 3,
**dadurch gekennzeichnet,**
**daß** die Motorparameter in einem am Motor vorhandenen Datenspeicher abgelegt und von dort zur Temperaturberechnung ausgelesen werden.

5. Verfahren nach einem der Ansprüche 1 - 4,
**dadurch gekennzeichnet,**
**daß** die Berechnung der Temperaturen unter Berücksichtigung der Betriebsgrößen, des zumindest einen gemessenen Temperaturwertes und der ausgelesenen Motorparameter sowie unter Verwendung des dynamischen thermischen Motormodells in der Antriebsregeleinheit vorgenommen wird.

## Claims

1. Method for monitoring the temperature of an electric motor which is operated on a drive control unit which defines the electrical operating variables, such as voltage, current and / or frequency, wherein, by means of at least one temperature sensor arranged on the electric motor, a temperature is measured and, using engine parameters stored to determine the winding temperature, it is evaluated, wherein temperatures arising at points of interest in the engine, such as the winding temperature, are furthermore calculated with the aid of a dynamic thermal engine model from the operating variables, from the at least one measured temperature value and from the engine parameters read, wherein the measured temperature is used to improve the calculating precision of the engine model.

2. Method according to claim 1,
**characterised in that**
the temperatures at the points of interest in the electric motor are calculated by means of a microcomputer.

3. Method according to claim 1,
**characterised in that**
the temperatures at the points of interest in the electric motor are calculated by means of an analog circuit.

4. Method according to one of the claims 1-3,
**characterised in that**
the engine parameters are stored in a data memory present on the engine and are read from there in order to calculate the temperature.

5. Method according to one of the claims 1 - 4,
**characterised in that**
the calculation of the temperatures is realised in the drive control unit in consideration of the operating variables, the at least one measured temperature value and the engine parameters read as well as using the dynamic thermal engine model.

## Revendications

1. Procédé de surveillance de la température d'un moteur électrique qui est exploité sur une unité de réglage d'entraînement qui prédétermine des valeurs de fonctionnement telles que tension, courant et / ou fréquence, sachant qu'une température est mesurée au moyen d'au moins un capteur de température, qui est installé sur le moteur électrique, et est évaluée en utilisant des paramètres du moteur qui sont mémorisés pour la détermination de la température du bobinage, sachant que de plus des températures, régnant à des endroits intéressants, comme la température du bobinage, sont calculées à l'aide d'un modèle de moteur thermique dynamique, à partir des valeurs de fonctionnement, de l'au moins une température mesurée et des paramètres de moteur extraits, sachant que la température mesurée sert à améliorer la précision du calcul du modèle de moteur.

2. Procédé selon la revendication 1,
**caractérisé en ce que**
les températures aux endroits intéressants dans le moteur électrique sont calculées au moyen d'un microcalculateur.

3. Procédé selon la revendication 1,
**caractérisé en ce que**
les températures aux endroits intéressants dans le moteur électrique sont calculées au moyen d'un circuit analogique.

4. **Procédé** selon l'une des revendications 1 à 3,
**caractérisé en ce que**
les paramètres du moteur sont déposés dans une mémoire de données, dont est équipé le moteur, et en sont extraits pour le calcul de la température.

5. Procédé selon l'une des revendications 1 à 4,
**caractérisé en ce que**
le calcul des températures est effectué dans l'unité de réglage d'entraînement en tenant compte des valeurs de fonctionnement, de l'au moins une température mesurée et des paramètres du moteur extraits, ainsi qu'en utilisant le modèle de moteur thermique dynamique.
